# EUROPEAN PATENT APPLICATION

(11) **EP 4 671 510 A1**
(43) Date of publication of application: **31.12.2025**
(21) Application number: 25185920.3
(22) Date of filing: 27.06.2025
(51) Int. Cl.: F01N 13/00

(54) **SILENCER**

(30) Priority: 28.06.2024 JP 2024105402
(71) Applicant: Kawasaki Motors, Ltd., Akashi, Hyogo 673-8666 (JP); Sankei Giken Kogyo Co., Ltd., Tokyo 115-8555 (JP)
(72) Inventor: OHNO, Masashi, HYOGO (JP); IWABUCHI, Takayuki, TOKYO (JP)
(74) Representative: dompatent

(57) **Abstract**

A silencer 20 includes an external shell member 31 having a silencer chamber SP defined therein and an internal pipe 51 disposed in the silencer chamber SP. The external shell member 31 has an external shell opening 60 formed in a peripheral wall thereof, and the internal pipe 51 has a pipe opening 68 is formed in a peripheral wall thereof. The internal pipe 51 includes a cylindrical projection 69 protruding radially outwards from the peripheral wall of the internal pipe 51. The projection 69 is provided along the circumference of the pipe opening 68 about the axis of the pipe opening 68. An oxygen sensor 64 is positioned so as to plug the pipe opening 68. The silencer 20 includes a cap 72 that covers the external shell opening 66. The cap 72 is joined to a portion of the external shell member 31 around the external shell opening 66 and to the projection 69 of the internal pipe 51. An outer radius dimension d1 of the projection 69 is set smaller than an inner radius dimension d2 of the external shell member 31.

## Description

### CROSS REFERENCE TO THE RELATED APPLICATION

This application is based on and claims Convention priority to a Japanese patent application No. 2024-105402 filed June 28, 2024, the entire disclosure of which is herein incorporated by reference as a part of this application.

### BACKGROUND OF THE INVENTION

### (Field of the Invention)

The present disclosure relates to a silencer that silences the noise of exhaust gas from a combustion engine.

### (Description of Related Art)

For example, combustion engines that are used as a drive source for vehicles such as a motorcycle are furnished with a silencer that provides purification and noise silencing of exhaust gas (e.g., JP Laid-open Patent Publication No. 2017-110616). A silencer described in JP Laid-open Patent Publication No. 2017-110616 comprises: a casing in which a silencer chamber is defined; and a pipe member which is disposed in the silencer chamber and through which exhaust gas is allowed to flow, also includes an exhaust gas sensor which senses the concentration of oxygen in the exhaust gas flowing through the pipe member.

In the silencer described in JP Laid-open Patent Publication No. 2017-110616, the exhaust gas sensor radially penetrates through both of the casing and the pipe member. Hence, a possible error in assembly of the casing and the pipe member could become an issue when fitting the exhaust gas sensor thereto, and can potentially lead to complications of assembly steps.

### SUMMARY OF THE INVENTION

The disclosure provides a silencer with simplified assembly steps.

The present disclosure provides a silencer which silences noise of exhaust gas from a combustion engine and which includes:
an external shell member in which a silencer chamber is defined, with the external shell member having a peripheral wall and an external shell opening formed in a part of the peripheral wall in a radially penetrating manner;
an internal pipe disposed in the silencer chamber, with the internal pipe having a peripheral wall and a pipe opening formed in a part of the peripheral wall in a radially penetrating manner in opposition to the external shell opening and with the internal pipe including a cylindrical projection protruding radially relative to the rest of the internal pipe along the circumference of the pipe opening about the axis of the pipe opening;
an internal component positioned in such a way to plug the pipe opening; and
a cap joined to a portion of the external shell member around the external shell opening and to the projection of the internal pipe so as to serve as a cover for the external shell opening, with the projection defining an outer radius dimension which is set smaller than the inner radius dimension of the external shell member.

The phrase "pipe opening... in opposition to the external shell opening" as used herein implies that the axis of the pipe opening in the internal pipe passes through the external shell opening in the external shell member.

A silencer for a saddle-riding vehicle according to the present disclosure utilizes a cap which is a distinct piece from the external shell member or the internal pipe, and therefore, a possible error in assembly of the external shell member and the internal pipe can be compensated for, to prevent the exhaust in the silencer chamber from escaping through the external shell opening. Further, the outer radius dimension defined by the projection of the internal pipe is made smaller than the inner radius dimension of the external shell member. This allows the internal pipe formed with the projection to be inserted axially into the external shell member without the projection getting caught by the latter during the assembly process for the silencer. Hence, assembly steps can be simplified as compared to when the steps comprise insertion of an internal pipe body with no projection into an external shell member and subsequent formation of a projection on the internal pipe body after the insertion.

Any combinations of at least two features disclosed in the claims and/or the specification and/or the drawings should also be construed as encompassed by the present disclosure. Especially, any combinations of two or more of the claims should also be construed as encompassed by the present disclosure.

### BRIEF DESCRIPTION OF THE DRAWINGS

The present disclosure will be more clearly understood from the following description of preferred embodiments made with reference to the accompanying drawings. However, the embodiments and the drawings are given merely for the purpose of illustration and explanation, and should not be used to delimit the scope of the present disclosure, which scope is to be delimited by the appended claims. In the accompanying drawings, alike numerals are assigned to and indicate alike parts throughout the different figures:
Fig. 1 is a side view of a motorcycle equipped with a silencer in accordance with a first embodiment of the present disclosure;
Fig. 2 is a side view of the silencer;
Fig. 3 is a side view of Fig. 2 without a silencer cover;
Fig. 4 is a longitudinal cross-sectional view of the silencer; and
Fig. 5 is a longitudinal cross-sectional view of Fig. 4 which shows a sensor fitting site on an enlarged scale.

### DESCRIPTION OF EMBODIMENTS

What follows is a description of a preferred embodiment of the present disclosure made with reference to the drawings. In the remaining discussion, the terms "front" and "rear" refer to the "front" and "rear" as viewed in a direction of travel of a vehicle. Thus, a front-to-rear direction of the vehicle coincides with a longitudinal direction of the vehicle. The terms "left" and "right" refer to the "left" and "right" as viewed from a driver seated in or on the vehicle. Thus, a "left-to-right" direction of the vehicle coincides with a widthwise direction of the vehicle. In connection with the vehicle widthwise direction, the terms "widthwise inner side" and "widthwise outer side" respectively refer to a side facing towards and a side facing away from a vehicle body centerline which runs in the front-to-rear direction.

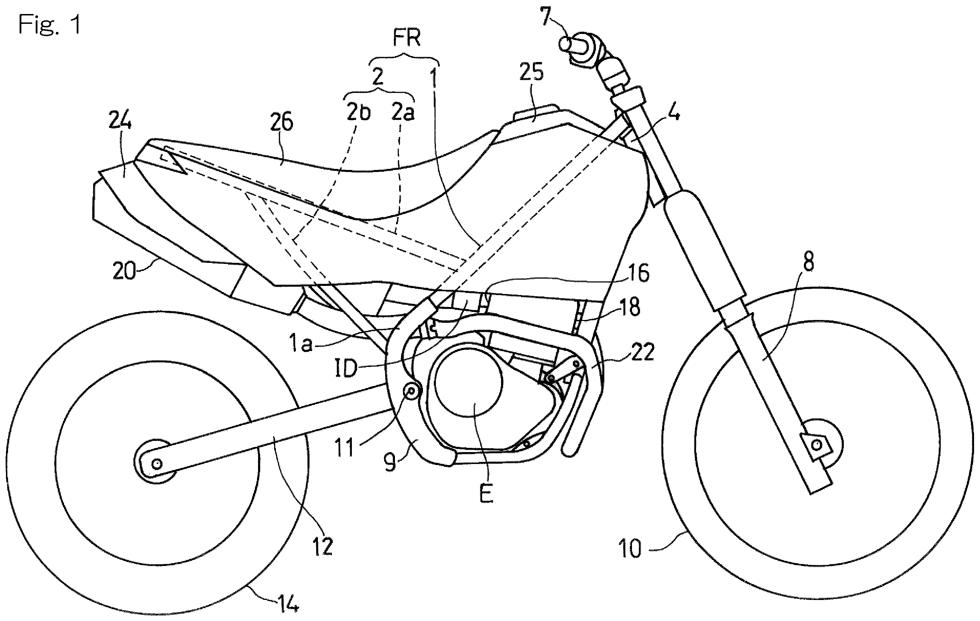

Fig. 1 is a side view of a motorcycle equipped with a silencer in accordance with a first embodiment of the present disclosure. The motorcycle in Fig. 1 is a motorcycle for off-road travel. However, a motorcycle for off-road travel is only one of the non-limiting examples of the motorcycle. A silencer according to the present disclosure is also applicable to vehicles other than motorcycles, including, for example, three-wheeled vehicles, four-wheeled buggies, and planning crafts. Further, a silencer according to the present disclosure can even be used with those combustion engines that do not serve as a drive source for vehicles.

The motorcycle has a vehicle body frame FR that includes a main frame 1 and rear frame 2 which form the front half and rear half thereof, respectively. The main frame 1 has a front end with a head pipe 4 and extends rearwards therefrom in a downwardly slanted manner. The main frame 1 has a rear edge 1a where it forms a downward curve to extend in a generally downward direction.

The rear frame 2 has an upper rear frame 2a and a lower rear frame 2b. The upper rear frame 2a has a front end that couples to a portion of the main frame 1 which is located above and forwards of the rear edge 1a and from which it extends relative to the main frame 1 in a rearward direction. The lower rear frame 2b has a front end that couples to a portion of the main frame 1 which is located slightly below the rear edge 1a. The lower rear frame 2b extends relative to the main frame 1 in a rearward direction in an upwardly slanted manner and has a rear end that couples to a rear portion of the upper rear frame 2a.

A front fork 8 is pivotably supported by the head pipe 4 through a steering shaft (not shown). The front fork 8 has an upper end to which a steering handlebar 7 is secured. The front fork 8 has a lower end to which a front wheel 10 is attached.

Swingarm brackets 9 are disposed below the rear edge 1a of the main frame 1. Swingarms 12 are pivotably supported on pivot shafts 11 attached to the swingarm brackets 9 so as to allow the swingarms 12 to swing up and down. The swingarms 12 have rear ends at which a rear wheel 14 is supported.

A combustion engine E which serves as a drive source for the motorcycle is located below and forwards of the main frame 1 and mounted to the main frame 1. The combustion engine E drives the rear wheel 14 through a power transfer member (not shown) such as a drive chain. The combustion engine E in the instant embodiment is, but not limited to, a single-cylinder 4-cycle engine E.

The combustion engine E has a rear side formed with an intake port 16 and a front side formed with an exhaust port 18. Air introduced though the intake port 16 and fuel form an air-fuel mixture that is burned in a combustion chamber and discharged via the exhaust port 18. An intake system ID connects to the intake port 16. In the intake system ID, the air taken in from the ambient environment is admixed with the fuel to produce the air-fuel mixture which is, then, fed to the intake port 16 of the combustion engine E as intake air.

The exhaust port 18 connects to an exhaust pipe 22. The exhaust pipe 22 extends rearwards on the right side of the combustion engine E and connects to an exhaust muffler 20 positioned above and on the right side of the rear wheel 14. The exhaust muffler 20 is one type of silencer that silences the noise of exhaust gas from the combustion engine E.

A muffler cover 24 externally covers a portion of the exhaust muffler 20, in particular, an upper half of the exhaust muffler 20. The muffler cover 24 is arranged with a radial gap to the exhaust muffler 20. With the muffler cover 24 providing cover for the exhaust muffler 20, a driver in a seated position is kept from directly touching the exhaust muffler 20. For example, the muffler cover 24 is made of sheet metal and detachably mounted to the exhaust muffler 20. This, however, illustrates only one of the non-limiting examples of arrangement of the exhaust pipe 22 and the exhaust muffler 20. The exhaust muffler 20 will be later described in detail.

A fuel tank 25 is carried by the main frame 1. The fuel tank 25 stores the fuel for the combustion engine E. The fuel tank 25 is positioned above the combustion engine E. A seat 26 which allows a driver to be seated is carried by the upper rear frame 2a behind the fuel tank 25.

### [Exhaust Muffler]

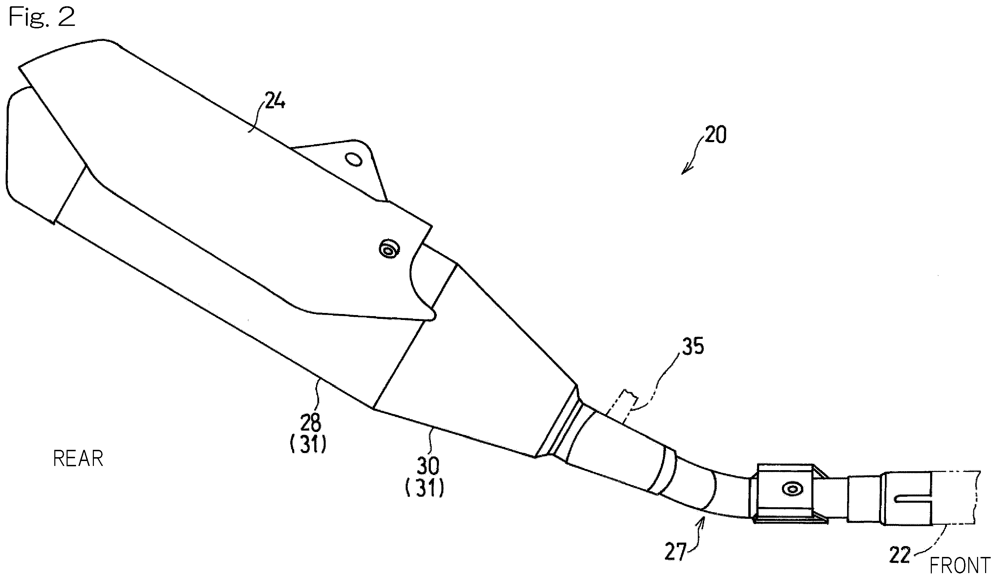

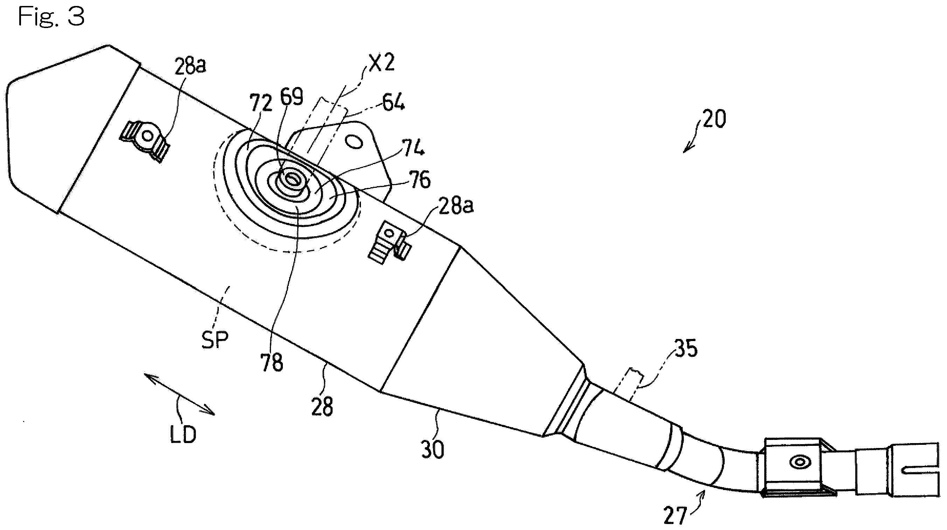

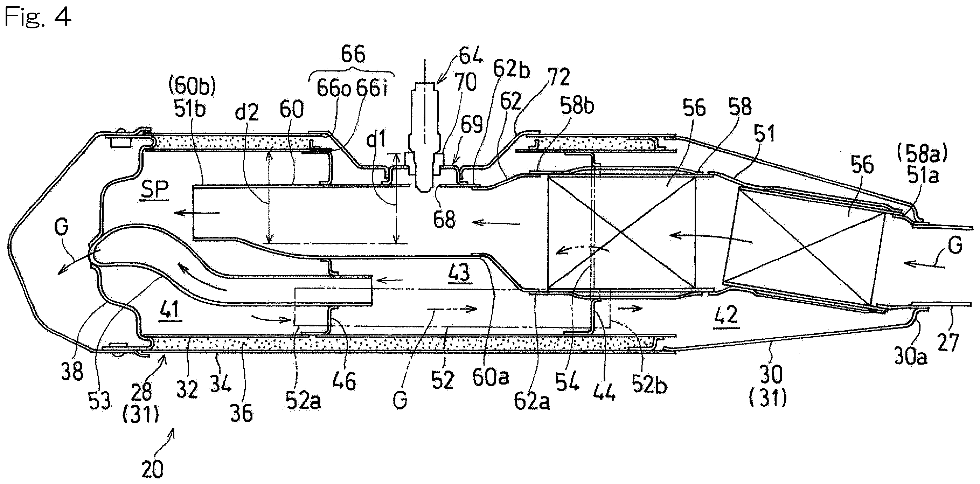

The following discussion focuses on the exhaust muffler 20 which represents one type of silencer according to the present disclosure. Fig. 2 is a side view of the exhaust muffler 20. Fig. 3 is a side view of the exhaust muffler 20 without the muffler cover 24. Fig. 4 is a longitudinal cross-sectional view of the exhaust muffler 20. The terms "upstream" and "downstream" used in the discussions that follow respectively refer to the "upstream" and "downstream" in the direction of flow of the exhaust gas G.

An exhaust muffler 20 according to the present disclosure has the silencing capability to attenuate the noise of the exhaust. In addition, the exhaust muffler 20 has the ability to limit the emission of possible harmful substances contained in the exhaust gas to the atmosphere and thus has the so-called purifying capability. The "silencing capability" as used herein refers to suppression of pressure energy of the exhaust through the provision of a resonant structure or formation of multiple compartments which promote repeated expansion and contraction of the exhaust.

Meanwhile, the "purifying capability" relies on, for example, a platinum family element (or, otherwise, a catalyst material) like platinum (Pt), palladium (Pd), and rhodium (Rh) that are precious noble metals to convert possible harmful substances contained in the exhaust gas to non-harmful substances through redox reactions between the platinum family element and the exhaust gas. More specifically, upon exposure of the exhaust gas to the platinum group element, nitrogen oxides (NOXs), carbon monoxide (CO), and hydrocarbons (CHs) that are harmful substances possibly contained in the exhaust gas are respectively converted to N₂, CO₂, and H₂O that are non-harmful substances.

Referring to Fig. 2, the exhaust pipe 22 connects to the exhaust muffler 20 with a connection pipe 27 interposed therebetween. The connection pipe 27, through which the exhaust gas G is allowed to flow, has an upstream end (or front end) that is detachably coupled to the exhaust pipe 22 by means of a band or some other element and has a downstream end (rear end) that is joined to the exhaust muffler 20 by welding. The connection pipe 27 is fitted, at the downstream end, with an upstream sensor 35 which senses the state of the exhaust gas G flowing through the connection pipe 27. In the instant embodiment, the upstream sensor 35 is an oxygen sensor which senses the level of oxygen in the exhaust gas G.

The exhaust muffler 20 includes: a cylindrical muffler main body 28; and a muffler inlet 30 that has an upstream end (or front end) to which the connection pipe 27 couples and a downstream end (or rear end) at which the muffler inlet 30 joins to the muffler main body 28. The muffler main body 28 and the muffler inlet 30 have interiors that define a silencer chamber SP. Accordingly, the muffler main body 28 and the muffler inlet 30 form an external shell member 31 of the exhaust muffler 20.

Referring to Fig. 3, the muffler main body 28 has an outer peripheral surface that is provided with mounts 28a to which the muffler cover 24 (Fig. 2) is fastened. In the instant embodiment, the mounts 28a are disposed in such a way that a downstream sensor which will be discussed later is present therebetween. More specifically, each of the mounts 28a has a weld nut that threadingly engages a bolt or some other fastener. Moreover, in the instant embodiment, two mounts 28a are provided and spaced apart in the front-to-rear direction. It should be understood, however, that the embodiment represents only one of the non-limiting examples of the structure, arrangement, and number of the mounts 28a. In the instant embodiment, the muffler main body 28 has a cylindrical shape with an elliptical, transverse cross section. It should be noted that the transverse cross-sectional shape of the muffler main body is not limited to being elliptical and may even be a perfect circle or generally polygonal.

The muffler main body 28 has: an inner tube 32 in which the silencer chamber SP is defined; and an outer tube 32 which is disposed radially outwards of the inner tube 32. That is, the muffler main body 28 has a double-wall configuration of the inner tube 32 and the outer tube 34, with the outer tube 34 serving as a radially outer enclosure for the inner tube 32.

In the instant embodiment, a noise-absorbent material 36 is disposed between the inner tube 32 and the outer tube 34. The noise-absorbent material 36 is, for example, but not limited to, glass wool. The inner tube 32 has a peripheral wall which is formed therein with perforated holes. The exhaust gas G in the silencer chamber SP enters the perforated holes to contact the noise-absorbent material 36. The noise-absorbent material 36 provided in the exhaust muffler 20 can attenuate the radiation noise of the exhaust gas G which emanates from the outer tube 34. Further, the layers of air formed by the noise-absorbent material 36 can keep down temperature rise of the surface of the outer tube 34 of the exhaust muffler 20.

The muffler inlet 30 is a conical member with a progressively increasing diameter from its upstream end to which the connection pipe 27 couples towards its downstream end which couples to the muffler main body 28. More specifically, the connection pipe 27 has a downstream end which is inserted into the upstream end of the muffler inlet 30 and joined to the inner peripheral surface of the muffler inlet 30 by welding. The downstream end of the muffler inlet 30 is inserted into the upstream end of the muffler main body 28, in particular, of the outer tube 34 and joined to the inner peripheral surface of the muffler main body 28 by welding.

The silencer chamber SP of the exhaust muffler 20 may be segmented into a plurality of silencer compartments. Referring to Fig. 4, the silencer chamber SP in the instant embodiment is segmented into three silencer compartments, namely, first to third silencer compartments 41, 42, 43. More specifically, the rear edge of the silencer chamber SP is closed by a lid member 38, and the front edge of the silencer chamber SP is closed by a front wall 30a of the muffler inlet 30. The silencer chamber SP is compartmentalized by a first divider wall 44 on the front side and a second divider wall 46 on the rear side. The lid member 38 is joined to the inner peripheral surface of the rear of the outer tube 34 by welding, and the first and second divider walls 44, 46 are joined to the inner peripheral surface of the inner tube 32 by welding.

The silencer compartments 41, 42, 43 are arranged, starting from the front, in the order of the second silencer compartment 42, the third silencer compartment 43, and the first silencer compartment 41. More specifically, the first silencer compartment 41 comprises a volume inside of the inner tube 32 that is defined between the lid member 38 and the second divider wall 46. The second silencer compartment 42 comprises a volume inside of the inner tube 32 and the muffler inlet 30 that is defined by the first divider wall 44 and the front end wall 30a of the muffler inlet 30. The third silencer compartment 43 comprises a volume inside of the inner tube 32 that is defined by the first divider wall 44 and the second divider wall 46.

Internal pipes 51 to 53 through which the exhaust gas G is allowed to flow are disposed in the silencer chamber SP of the exhaust muffler 20. In the instant embodiment, the exhaust muffler 20 has three internal pipes 51 to 53, namely, first to third internal pipes 51 to 53.

The first internal pipe 51 has an upstream end 51a with which the downstream end of the connection pipe 27 communicates. The first internal pipe 51 extends downstream from the upstream end 51a in the direction of flow, extends through the first and second divider walls 44, 46, and has a downstream end 51b which opens to the first silencer compartment 41.

The first internal pipe 51 has crossing portions 51c which extend through and are joined to the first and second divider walls 44, 46 by welding. In other words, the first internal pipe 51 is supported on the inner diameter surface of the inner tube 32 through the first and second divider walls 44, 46. That is, portions 44a, 46a of the first and second divider walls 44, 46 which are welded to the inner tube 32 of the external shell member 31 form supports by means of which the first internal pipe 51 is supported on the external shell member 31. The structure of the first internal pipe 51 will be further discussed later in detail.

The second internal pipe 52 has an upstream end 52a which opens to the first silencer compartment 41. The second internal pipe 52 extends from the upstream end 52a towards the front to pass through the second divider wall 46 and the first divider wall 44, and has a downstream end 52b which opens to the second silencer compartment 42. Moreover, the first divider wall 44 is provided with a through hole 54 which puts the second silencer compartment 42 in communication with the third silencer compartment 43.

The third internal pipe 53 has an upstream end 53a which opens to the third silencer compartment 43. The third internal pipe 53 extends from the upstream end 53a towards the rear to pass through the second divider wall 46, and has a downstream end which serves an opening into the external environment of the exhaust muffler 20.

The exhaust gas G which has flown into the first internal pipe 51 of the exhaust muffler 20 via the connection pipe 27 is allowed to flow through the first internal pipe 51 to enter the first silencer compartment 41 and expands there. The exhaust gas G in the first silencer compartment 41, then, undergoes contraction by being forced to flow through the second internal pipe 52, and enters the second silencer compartment 42 and expands there. The exhaust gas G in the second silencer compartment 42, in turn, undergoes contraction by being forced to go past the through hole 54, and flows into the third silencer compartment 43 and expands there. The exhaust gas G in the third silencer compartment 43 is discharged via the third internal pipe 53 to the external environment of the muffler 20.

In this way, the exhaust gas G loses its pressure energy as it undergoes repeated expansion and contraction within the exhaust muffler 20. Thus, the noise of the exhaust gas G is silenced as it is discharged to the external environment of the exhaust muffler 20. Alternatively or in addition, a through hole via which the first silencer compartment 41 communicates with the third silencer compartment 43 may be provided in the second divider wall 46 to help silence the noise of the exhaust gas G by promoting interference (or resonance) in the third silencer compartment 43 between a fraction of the exhaust gas G which flows in from the first silencer compartment 41 and a fraction of the exhaust gas G which flows in from the second silencer compartment 42.

### [Catalyst]

Catalysts 56 are arranged in the first internal pipe 51. The catalysts 56 purify possible harmful exhaust components contained in the exhaust gas G. More specifically, the first internal pipe 51 includes, starting from the upstream side, a catalyst accommodation part 58, a straight pipe part 60, and a diameter reduction part 62. The catalyst accommodation part 58 is a part of the first internal pipe 51 which has the largest diameter and accommodates the catalysts 56 therein.

In the instant embodiment, two catalysts 56 are accommodated in the catalyst accommodation part 58 so as to be adjacently arranged in the direction of flow of the exhaust gas G. It should be understood, however, that the number of the catalysts 56 is not limited to two and there may alternatively be one or at least three catalysts 56. Further, in the instant embodiment, a downstream one of the catalysts 56 has a larger diameter than that of an upstream one of the catalysts 56. It should be understood, however, that this illustrates only one of the non-limiting examples of the size relationship between the two catalysts 56, and the upstream one of the catalysts 56 may alternatively have a larger diameter than that of the downstream one of the catalysts 56 or the two may have the same diameter instead.

The straight pipe part 60 has a smaller diameter than that of the catalyst accommodation part 74 and extends straight in the front-to-rear direction. The diameter reduction part 62 connects the catalyst accommodation part 58 with the cavity part 60 and has a diameter which progressively decreases as it extends downstream. The catalyst accommodation part 58, the straight pipe part 60, and the diameter reduction part 62 are constructed as respective distinct pipes that are integrated together by welding.

The catalyst accommodation part 58 has an upstream end 58a to which the downstream end of the connection pipe 27 is joined such that the upstream end 58a is in communication with the connection pipe 27. Thus, the upstream end 58a of the catalyst accommodation part 58 forms the upstream end 51a of the first internal pipe 51. Further, the catalyst accommodation part 58 has a downstream end 58b which is joined to the upstream end 62a of the diameter reduction part 62.

The diameter reduction part 62 has a downstream end 62b which is joined to the upstream end 60a of the straight pipe part 60. The straight pipe part 60 has a downstream end 60b which opens to the first silencer compartment 41. Thus, the downstream end 60b of the straight pipe part 60 forms the downstream end 51b of the first internal pipe 51.

A straight part of some length should be present downstream of the catalysts 56. In the instant embodiment, the straight pipe part 60 provides such a straight part. For instance, the straight pipe part 60 may be formed to have a length that is longer than the diameter of the catalysts 56.

### [Sensor]

The exhaust muffler 20 is fitted with the downstream sensor 64. The downstream sensor 64 senses the state of the exhaust gas G flowing through the first internal pipe 51. In the instant embodiment, the downstream sensor 64 is an oxygen sensor which senses the level of oxygen in the exhaust gas G.

Referring Fig. 2, the downstream sensor 64 is externally covered by the muffler cover 24. This way, it is possible to prevent the downstream sensor 64 from colliding with possible obstacles. By using the muffler cover 24 to provide cover for the downstream sensor 64, the need for a component that is dedicated to providing cover for the downstream sensor 64 can be obviated. Further, while an off-road vehicle such as the one in the instant embodiment is susceptible to dirt, water, etc., the downstream sensor 64 in the instant embodiment is protected from dirt or water as it is covered by the muffler cover 24.

In the instant embodiment, as illustrated in Fig. 4, the upstream sensor 35 (Fig. 3) is situated upstream of the catalysts 56, and the downstream sensor 64 is situated downstream of the catalysts 56. For instance, the upstream sensor 35 is relied on for fuel injection control (or air-fuel ratio control). For instance, the downstream sensor 64 is relied on to diagnose possible failure of the catalysts 56.

The downstream sensor 64 extends into the straight pipe part 60 of the first internal pipe 51. In the instant embodiment, the downstream sensor 64 extends into a portion of the first internal pipe 51 which is the most proximate to the inner tube 32 and the outer tube 34 and has a smaller diameter than that of the catalyst accommodation part 58. In other words, the downstream sensor 64 is disposed in a narrowed area of the passage which is located downstream of the catalysts 56. Thus, the downstream sensor 64 is disposed in a region which is downstream of the catalysts 56 and where the exhaust gas G becomes concentrated. Therefore, the exhaust gas G in a radially densified form can come into contact with the sensor, and a sensing variation can thereby be reduced.

### [Downstream Sensor Fitting Structure]

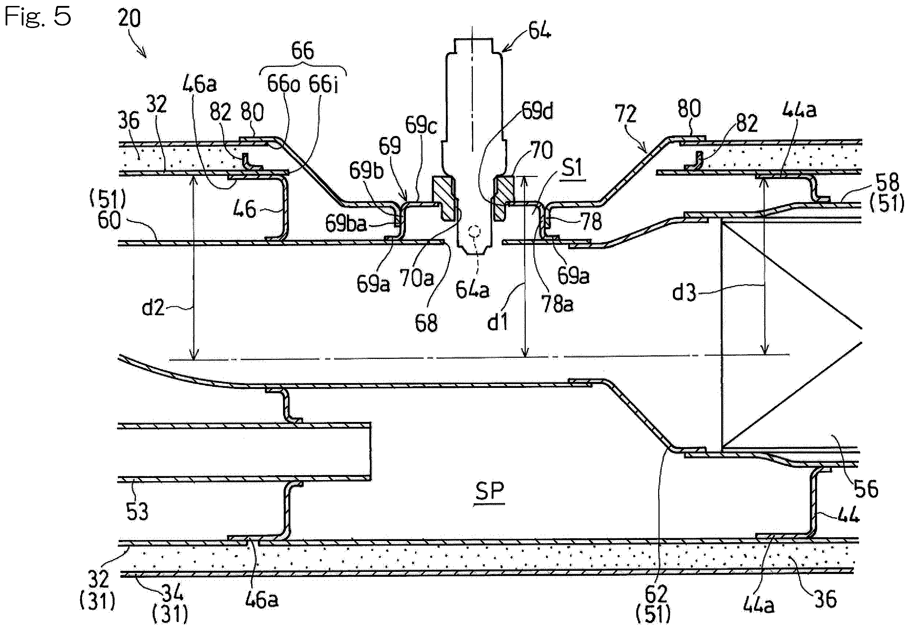

A fitting structure for the downstream sensor 64 will be discussed with the aid of Fig. 5. In the following discussion, the terms "axial direction", "radial direction" and "circumferential direction" refer to the axial direction, radial direction and circumferential direction of the exhaust muffler 20, respectively. The downstream sensor 64 extends in the radial direction by passing through the peripheral wall of the first internal pipe 51, the peripheral wall of the inner tube 32, and the peripheral wall of the outer tube 34.

An external shell opening 66 is formed in a part of the peripheral wall of the external shell member 31 in a radially penetrating manner. More specifically, an inner tube opening 66i is formed in a part of the peripheral wall of the inner tube 33 in a radially penetrating manner, and an outer tube opening 66o is formed in a part of the peripheral wall of the outer tube 34 in a radially penetrating manner. In the instant embodiment, the inner tube opening 66i and the outer tube opening 66o are shaped in a generally coaxial geometry, and the outer tube opening 66o is formed to have a larger diameter than that of the inner tube opening 66i. The external shell opening 66 is formed of the inner tube opening 66i and the outer tube opening 66o.

A pipe opening 68 is formed in a part of the peripheral wall of the first internal pipe 51 in a radially penetrating manner. The pipe opening 68 is formed in opposition to the external shell opening 66. The expression "the pipe opening 68... in opposition to the external shell opening 66" as used herein implies that the axis of the pipe opening 68 of the first internal pipe 51 passes through the external shell opening 66 of the external shell member 31. In the instant embodiment, the pipe opening 68 and the external shell opening 66 are shaped in a generally coaxial geometry.

More specifically, the pipe opening 68 is formed in the straight pipe part 60 of the first internal pipe 51. Thus, the straight pipe part 60 constitutes a cavity part of the first internal pipe 51 where the pipe opening 68 is formed. In other words, the pipe opening 68 is formed downstream of the catalysts 56 in the first internal pipe 51.

In the instant embodiment, the supports for (or the crossing portions 51c of) the first internal pipe 51 are formed on the axially opposite sides of the pipe opening 68. Thus, the first internal pipe 51 is supported by the external shell member 31 on the axially opposite sides of the pipe opening 68.

A radially protruding, cylindrical projection 69 is formed on the peripheral wall of the first internal pipe 51. The projection 69 is formed along the circumference of the pipe opening 68 about the axis of the pipe opening 68 and protrudes radially outwards from the peripheral wall of the first internal pipe 51. In the instant embodiment, the projection 69 is formed as a distinct piece from the first internal pipe 51 and joined to the outer peripheral surface of the first internal pipe 51 by welding. However, this illustrates only one of the non-limiting examples of the configuration of the projection 69, and the projection 69 may alternatively be formed as a one-piece construction with the first internal pipe 51.

In the instant embodiment, the projection 69 is formed as a bent sheet metal. More specifically, the projection 69 has a joining section 69a which is joined to the peripheral wall of the first internal pipe 51 and a cylindrical peripheral wall section 69b which extends radially outwards from the joining section 69a. In the instant embodiment, the projection 69 also has a top wall 69c which extends inwards from the protruding edge of the peripheral wall section 69b. Thus, an interior space S1 is defined by the peripheral wall section 69b and the top wall 69c of the projection 69. The interior space S1 is in communication with the pipe opening 68.

The downstream sensor 64 is positioned in such a way to plug the pipe opening 68. Hence, in the instant embodiment, the oxygen sensor 64 constitutes an internal component to plug the pipe opening 68. However, the oxygen sensor 64 is only one of the non-limiting examples of the internal component. Other such examples include a temperature sensor which senses the temperature of the exhaust gas, a flow velocity sensor which senses the velocity of the flow of the exhaust gas, and a pressure sensor which senses the pressure of the exhaust gas, and may even include elements other than sensors, like an actuator.

In the instant embodiment, the downstream sensor 64 extends through the outer tube opening 66o and the inner tube opening 66i of the exhaust muffler 20 and is fitted to the projection 69. More specifically, a through hole 69d is formed in the top wall 69c of the projection 69, and a mount 70 is disposed in the through hole 69d. The downstream sensor 64 is fitted to the mount 70.

In the instant embodiment, the mount 70 is a cylindrical boss part that is formed therein with a female threading 70a. The outer peripheral surface of the boss part 70 is joined into the through hole 69d of the projection 69, and the downstream sensor 64 is threadingly engaged to the female threading 70a in the boss part 70. It should be understood, however, that the boss part illustrates only one of the non-limiting examples of the mount 70.

While the projection 69 and the mount 70 in the instant embodiment are formed as distinct pieces and joined by welding, the projection 69 and the mount 70 may alternatively be formed as a one-piece construction. Further, while the mount 70 is joined into the through hole 69d of the projection 69 in the instant embodiment, the mount 70 may alternatively be fitted into the pipe opening 68 of the first internal pipe 51.

The downstream sensor 64 includes a sensing unit 64a positioned in the interior space S1 of the projection 69. The sensing unit 64a is operable to contact the exhaust gas G flowing through the first internal pipe 51 and to acquire the state of the exhaust gas G. It should be understood, however, that the sensing unit 64a of the downstream sensor 64 may instead be positioned in the first internal pipe 51. In any case, the downstream sensor 64 in the instant embodiment is borne by the projection 69 in such a way that the sensing unit 64a is positioned in the interior space S1 of the projection 69.

The projection 69 defines an outer radius dimension d1 which is set smaller than the inner radius dimension d2 of the external shell member 31. The phrase "outer radius dimension d1 defined by the projection 69" as used herein refers to a dimension as measured between the centerline C1 of the muffler and the radially outermost point of the projection 69. When the projection 69 is provided with a mount 70 as in the instant embodiment, the phrase "outer radius dimension d1 defined by the projection 69" denotes a dimension as measured up to the radially outermost point of the mount 70.

Further, the phrase "inner radius dimension d2 of the external shell member 31" refers to a dimension as measured between the centerline C1 of the muffler and the radially innermost point of the inner diameter surface of the external shell member 31. When the external shell member 31 has a double-tube configuration of the inner tube 32 and the outer tube 34 as in the instant embodiment, the phrase "inner radius dimension d2 of the external shell member 31" refers to a dimension as measured up to the radially innermost point of the inner diameter surface of the inner tube 32.

In the instant embodiment, the outer radius dimension d1 defined by the projection 69 is set smaller than the outer radius dimension d3 of the supports 44a, 46a. The phrase "outer radius dimension d3 of the support(s) 44a, 46a" as used herein refers to a dimension as measured between the centerline C1 of the muffler and the radially outer point of the support(s) 44a, 46a. When there is more than one support 44a, 46a, the phrase "outer radius dimension d3 of the support(s) 44a, 46a" denotes that measured for a support with the smallest diameter thereamong. In the instant embodiment, the two supports 44a, 46a have identical outer radius dimensions d3.

### [Cap]

The exhaust muffler 20 includes a cap 72 that serves a cover for the external shell opening 66 of the external shell member 31. As illustrated in Fig. 3, the cap 72 is disposed so as to surround the downstream sensor 64 to block the exhaust gas G in the silencer chamber SP from leaking outwards. In the instant embodiment, the cap 72 is shaped as a bent sheet metal and has an elliptical shape with a major axis which lies in the longitudinal direction LD of the exhaust muffler 20 when viewed in a direction along the axis X2 of the downstream sensor 64. While the cap 72 in the instant embodiment is formed of metal material, the cap 72 may have any material or shape other than that of the instant embodiment in a non-limiting manner as long as it closes a cavity formed to allow insertion of the sensor.

The cap 72 has, at the center thereof, a recess 74 which is depressed towards the silencer chamber SP. More specifically, the cap 72 has a sloped surface 76 that progressively depresses towards the center from the outer periphery of the cap 72 to connect to the recess 74. The amount of depression in the cap 72 relative to the outer tube 34 is not constant but varies on different angular segments of the cap 72. In the instant embodiment, the amount of depression in the cap 72 relative to the outer tube 34 in a mounted state of the cap 72 on the vehicle becomes smaller towards the widthwise outer side (or right side in the instant embodiment) of the cap 72. In this way, the recess 74 can be kept from collecting water when the vehicle stands on a side stand.

Referring to Fig. 5, the cap 72 has: a pipe-side coupling portion 78 which is coupled to the first internal pipe 51; and an outer tube-side coupling portion 80 which is coupled to the outer tube 34. Thus, the cap 72 is coupled to the first internal pipe 51 which serves as the radially innermost component and to the outer tube 34 which serves as the radially outermost component, but is not coupled to the inner tube 32 which lies as an intermediate component therebetween. In the instant embodiment, the pipe-side coupling portion 78 constitutes the radially inner portion of the cap 72, and the outer tube-side coupling portion 80 constitutes the radially outer portion of the cap 72.

The pipe-side coupling portion 78 is joined to a part of the first internal pipe 51 which is adjacent to the pipe opening 68. In the instant embodiment, the pipe-side coupling portion 78 is joined to the projection 69 of the first internal pipe 51. More specifically, the pipe-side coupling portion 78 is joined to the peripheral wall section 69b of the projection 69 in such a way to form an overlap therewith in a radial direction.

Meanwhile, the outer tube-side coupling portion 80 is joined to a portion of the external shell member 31 around the external shell opening 66. More specifically, the outer tube-side coupling portion 80 is joined to the external shell member 31 in such a way to form an overlap therewith in an axial direction. In the instant embodiment, the outer tube-side coupling portion 80 is joined to a portion of the outer tube 34 around the external shell opening 66o. More specifically, the outer tube-side coupling portion 80 is joined to the outer tube 34 in such a way to form an overlap therewith in an axial direction.

The peripheral wall section 69b of the projection 69 of the first internal pipe 51 has an outer surface 69ba parallel to the axis X2 of the downstream sensor 64 (Fig. 3), i.e., the radial direction of the first internal pipe 51. Meanwhile, the pipe-side coupling portion 78 has an inner surface 78a that follows the outer surface 69ba of the peripheral wall section 69b. The outer surface 69ba of the peripheral wall section 69b of the projection 69 and the inner surface 78a of the pipe-side coupling portion 78 are joined by welding in such a way to form an overlap in a radial direction. In so doing, the first internal pipe 51 and the pipe-side coupling portion 78 of the cap 72 can relatively move in directions along the outer surface 69ba and the inner surface 78a to thereby compensate for possible radial misalignment. Thus, the pipe-side coupling portion 78 functions as a radial joining margin during the joining.

The outer tube-side coupling portion 80 is formed by an outer end of the cap 72 that is bent in an axial direction to extend in the axial direction. The outer tube-side coupling portion 80 extends in the axial direction along the outer peripheral surface of the outer tube 34, and the outer tube-side coupling portion 80 and the outer peripheral surface of the outer tube 34 are joined by welding in such a way to form an overlap in the axial direction. In so doing, the outer tube-side coupling portion 80 and the outer tube 34 can relatively move in the axial direction to thereby compensate for possible axial misalignment. Thus, the outer tube-side coupling portion 80 of the cap 72 functions as an axial joining margin during the joining.

As mentioned above, the cap 72 is welded at the pipe-side coupling portion 78 to the projection 69 of the first internal pipe 51. Further, the cap 72 is welded at the outer tube-side coupling portion 80 to the outer tube 34. The all-around welding of the first internal pipe 51 and the outer tube 34 with the cap 72 in between for closure prevents outward leakage of the gas in the silencer chamber SP. The inner tube 32 is not welded to the cap 72, and there may be a clearance between the inner tube 32 and the cap 72. Such a clearance will compensate for a possible error in assembly.

It should be noted that the instant embodiment illustrates only one of the non-limiting examples of the configuration of the cap 72, and the cap 72 may have any configuration as long as it can compensate for possible radial and axial misalignment between the external shell member 31 and the first internal pipe 51.

### [Restriction Wall]

A restriction wall 82 is arranged between the inner tube 32 and the outer tube 34 in the vicinity of the site where the downstream sensor 64 is fitted. The restriction wall 82 is a member with an L-shaped cross section and restricts the noise-absorbent material or filler material 36 from moving towards the external shell opening 66. The restriction wall 82 is arranged along the downstream sensor 64, i.e., along the external shell opening 66, and prevents the filler material 36 between the inner tube 32 and the outer tube 34 from being displaced towards the external shell opening 66.

While the instant embodiment has been described in connection with an example in which the exhaust muffler 20 is used as a silencer according to the present disclosure, the exhaust muffler 20 is only one of the non-limiting examples of a silencer according to the present disclosure. Other examples can include an exhaust chamber which is to be arranged upstream of an exhaust muffler 20 and allows expansion of the exhaust.

The aforementioned configuration utilizes a cap 72 which is a distinct piece from the external shell member 31 and the first internal pipe 51 shown in Fig. 4, and therefore, a possible error in assembly of the external shell member 31 and the first internal pipe 51 can be compensates for to prevent the exhaust gas G in the silencer chamber SP from escaping through the external shell opening 66. Further, the outer radius dimension d1 defined by the projection 69 of the first internal pipe 51 is made smaller than the inner radius dimension d2 of the external shell member 31. This allows the first internal pipe 51 formed with the projection 69 to be inserted axially into the external shell member 31 without the projection 69 getting caught by the latter during the assembly process for the exhaust muffler 20. Hence, assembly steps can be simplified as compared to when the steps comprise insertion of a pipe body with no projection 69 into an external shell member 31 and subsequent formation of a projection 69 on the pipe body after the insertion.

In the instant embodiment, the cap 72 has a radially outer portion 80 which is joined to the external shell member 31 in such a way to form an overlap therewith in the axial direction of the first internal pipe 51, and has a radially inner portion 78 which is joined to the projection 69 in such a way to form an overlap therewith in a radial direction. According to this configuration, possible misalignment in both the axial direction and radial direction between the first internal pipe 51 and the external shell member 31 can be compensated for by the cap 72.

In the instant embodiment, the external shell member 31 includes an inner tube 32 in which the silencer chamber SP is defined and an outer tube 34 which is disposed radially outwards of the inner tube 32, a radially outer portion 80 or the radially outer portion 80 of the cap 72 is joined to the outer tube 34 in such a way to form an overlap therewith in an axial direction, and the outer radius dimension d1 defined by the projection 69 is set smaller than the inner radius dimension d2 of the inner tube 32. Thus, a design according to the present disclosure can also be applied to silencers with a double-tube configuration.

In the instant embodiment, the first internal pipe 51 is supported on the inner diameter surface of the external shell member 31 by means of a support 44a, 46a, and the outer radius dimension d1 defined by the projection 69 is set smaller than the outer radius dimension d3 of the support 44a, 46a. According to this configuration, the projection 69 can be prevented from hindering the performance of the support, as it is formed to define a smaller radius than that of the support 44a, 46a.

Moreover, in the instant embodiment, the support comprises supports 44a, 46a that are formed on the axially opposite sides of the pipe opening 68. According to this configuration, the supports 44a, 46a provide support for the first internal pipe 51 from the axially opposite sides, making it possible for the support rigidity in the vicinity of the pipe opening 68 to be enhanced and thereby making it easier for the welding steps for the cap 72 to be performed on the first internal pipe 51.

In the instant embodiment, the projection 69 is provided with a mount 70 bearing the internal component 64 which extends into the pipe opening 68. According to this configuration, the projection 69 has the function of bearing the internal component 64, thereby eliminating the need for the internal pipe body to be provided with a feature to support the internal component. Hence, a simpler design is facilitated.

In the instant embodiment, the first internal pipe 51 has a portion which is spaced upstream from the pipe opening 68 and from which the diameter of the first internal pipe 51 progressively decreases as it extends downstream. According to this configuration, it can be prevented that the site of the first internal pipe 51 where the projection 69 is formed becomes oversized in a radial direction. As a result, the first internal pipe 51 can be inserted with ease into the external shell member 31.

In the instant embodiment, the first internal pipe 51 accommodates a catalyst 56, the pipe opening 68 is formed downstream of the catalyst 56 in the first internal pipe 51, and an oxygen sensor 64 extends into the pipe opening 68. According to this configuration, the oxygen sensor 64 can detect potential deterioration of the catalyst 56.

In the instant embodiment, the first internal pipe 51 includes: a catalyst accommodation part 58 in which the catalyst 56 is accommodated; a straight pipe part (or cavity part) 60 in which the pipe opening 68 is formed; and a diameter reduction part 62 connecting the catalyst accommodation part 58 with the straight pipe part 60 and having a diameter which progressively decreases as it extends downstream, and the catalyst accommodation part 58, the straight pipe part 60, and the diameter reduction part 62 form respective distinct pipes that are integrated together. According to this configuration, the catalyst 56 can be provided in a sufficient volume in the catalyst accommodation part 58 by forming the catalyst accommodation part 58 with a large diameter. Further, a sufficient space can be reserved for the silencer chamber SP by the reduction in the diameter of the straight pipe part 60, and this enhances the freedom with which to arrange elements within the silencer chamber SP. By providing the catalyst accommodation part 58, the straight pipe part 60, and the diameter reduction part 62 in the form of distinct pipes and integrating them together, it becomes possible for the first internal pipe 51 to be formed in a complex shape with ease.

In the instant embodiment, the projection 69 has an interior which defines an interior space S1 that is in communication with the pipe opening 68, and the oxygen sensor 64 includes a sensing unit 64a positioned in the interior space S1. According to this configuration, it can be prevented that the exhaust gas G directly hits the sensing unit 64a of the oxygen sensor 64, thereby keeping the oxygen sensor 64 from deteriorating.

A design according to the present disclosure is not limited to silencers but can be applied to any double-pipe structures that comprise an external pipe and an internal pipe. The resulting double-pipe structure can not only compensate for possible errors in assembly, and also, have an improved assemblability.

The preceding embodiment represents only one of the non-limiting embodiments of the present disclosure, and various additions, changes, or omissions can be made therein without departing from the principle of the present disclosure. For instance, examples of a vehicle to which a silencer according to the present disclosure can be installed may include, but are not limited to, saddle-riding vehicles with a relatively compact size on which a driver can be seated in a straddling position. Other examples can include four-wheeled vehicles in which passengers can ride side-by-side in a widthwise direction. Moreover, a silencer according to the present disclosure can be applied to hybrid vehicles with an internal combustion engine and an electric motor. Preferably and advantageously, a silencer according to the present disclosure can be applied to vehicles on which the outer tube of the muffler is made to be at least partially exposed to the outside. A silencer according to the present disclosure can even be used with combustion engines that do not serve as a drive source of a vehicle.

A silencer according to the present disclosure can be advantageously adapted as a silencer with a double-tube configuration of an inner tube and an outer tube. In other words, a silencer according to the present disclosure can be used as a silencer having a triple-walled structure of a pipe member, an inner tube, and an outer tube. Therefore, it can be used with a vehicle in any layout in a non-limiting way.

If applied to a motorcycle, a silencer according to the present disclosure may be disposed only on one of the widthwise outer sides at a rear wheel. Or, it can be disposed on both of the widthwise outer sides at the rear wheel. Further, the silencer may be disposed directly above the rear wheel or may serve as an exhaust chamber disposed between the rear wheel and a combustion engine. The silencer chamber with a compartmentalized structure in the preceding embodiment merely represents one example, and other existing structures may also be adopted as long as they are at least double-walled by an external shell member and a pipe member. Therefore, such structures are also included within the scope of the present disclosure.

## Claims

1. A silencer that silences noise of exhaust gas from a combustion engine, the silencer comprising:
an external shell member in which a silencer chamber is defined, the external shell member having a peripheral wall and an external shell opening formed in a part of the peripheral wall in a radially penetrating manner;
an internal pipe disposed in the silencer chamber, the internal pipe having a peripheral wall and a pipe opening formed in a part of the peripheral wall in a radially penetrating manner in opposition to the external shell opening, and the internal pipe including a cylindrical projection protruding radially relative to a rest of the internal pipe along a circumference of the pipe opening about an axis of the pipe opening;
an internal component positioned in such a way to plug the pipe opening; and
a cap joined to a portion of the external shell member around the external shell opening and to the projection of the internal pipe so as to serve as a cover for the external shell opening,
the projection defining an outer radius dimension which is set smaller than an inner radius dimension of the external shell member.

2. The silencer as claimed in claim **1,** wherein the cap has a radially outer portion which is joined to the external shell member in such a way to form an overlap therewith in an axial direction of the internal pipe, and has a radially inner portion which is joined to the projection in such a way to form an overlap therewith in a radial direction of the internal pipe.

3. The silencer as claimed in claim 1or 2, wherein
the external shell member comprises: an inner tube in which the silencer chamber is defined; and an outer tube which is disposed radially outwards of the inner tube,
a radially outer portion of the cap is joined to the outer tube in such a way to form an overlap therewith in an axial direction of the internal pipe, and
the outer radius dimension defined by the projection is set smaller than an inner radius of the inner tube.

4. The silencer as claimed in any one of claims 1 to 3, wherein
the internal pipe includes a support by means of which the internal pipe is supported on an inner diameter surface of the external shell member, and
the outer radius dimension defined by the projection is set smaller than an outer radius dimension of the support.

5. The silencer as claimed in any one of claims 1 to 4, wherein
the internal pipe includes a support by means of which the internal pipe is supported on an inner diameter surface of the external shell member, and
the support is formed on each of axially opposite sides of the pipe opening.

6. The silencer as claimed in any one of claims 1 to 5, wherein the projection includes a mount which bears the internal component.

7. The silencer as claimed in any one of claims 1 to 6, wherein the internal pipe has a portion which is spaced upstream from the pipe opening and from which a diameter of the internal pipe progressively decreases as it extends downstream.

8. The silencer as claimed in any one of claims 1 to 7, wherein
the internal pipe accommodates a catalyst,
the internal component comprises an oxygen sensor which senses a concentration of oxygen in the exhaust gas, and
the pipe opening is formed downstream of the catalyst in the internal pipe.

9. The silencer as claimed in claim 8, wherein
the internal pipe includes: a catalyst accommodation part in which the catalyst is accommodated; a cavity part in which the pipe opening is formed; and a diameter reduction part connecting the catalyst accommodation part with the cavity part and having a diameter which progressively decreases as it extends downstream, and
the catalyst accommodation part, the cavity part, and the diameter reduction part form respective distinct pipes that are integrated together.

10. The silencer as claimed in claim 8 or 9, wherein
the projection has an interior with an interior space that is in communication with the pipe opening, and
the oxygen sensor includes a sensing unit positioned in the interior space.

11. A double-pipe structure comprising:
an external pipe having a peripheral surface and an external shell opening formed in a part of the peripheral surface in a radially penetrating manner;
an internal pipe disposed in an internal space of the external pipe, the internal pipe having a peripheral surface and a pipe opening formed in a part of the peripheral surface in a radially penetrating manner in opposition to the external shell opening, and the internal pipe including a cylindrical projection protruding radially relative to a rest of the internal pipe along a circumference of the pipe opening about an axis of the pipe opening;
an internal component positioned in such a way to plug the pipe opening; and
a cap joined to a portion of the external pipe around the external shell opening and to the projection of the internal pipe so as to serve as a cover for the external shell opening,
a portion of the internal pipe where the projection is formed defining an outer radius dimension which is set smaller than an inner radius dimension of the external pipe.
